# FASCICULE DE BREVET EUROPEEN

(11) **EP 0 425 387 B1**
(45) Date de publication et mention de la délivrance du brevet: **31.08.1994**
(21) Numéro de dépôt: 90403022.8
(22) Date de dépôt: 26.10.1990
(51) Int. Cl.: B60K 6/02, B62D 59/04

(54) **Véhicule routier composé**
Gegliedertes Strassenfahrzeug
Compound road vehicle

(30) Priorité: 26.10.1989 FR 8914030
(43) Date de publication de la demande: 02.05.1991
(73) Titulaire: S.I.T.A., F-75821 Paris Cédex 17 (FR)
(72) Inventeur: De Monclin, Bruno, F-75821 Paris Cedex 17 (FR)
(74) Mandataire: Coutel, Jean-Claude

(56) Documents cités:
- EP-A- 0 041 111
- DE-A- 3 739 919
- GB-A- 2 071 032
- GB-A- 2 196 912
- US-A- 3 502 165

## Description

L'invention concerne un véhicule de transports différenciés de matières et/ou de personnes, c'est-à-dire des transports au cours desquels les conditions de vitesse, de fréquences d'arrêts, de distances, de bruits et autres facteurs varient sensiblement.

Les impératifs de la vie industrielle amènent souvent à effectuer certains transports par véhicules dans des conditions nettement différenciées : ainsi, par exemple, a-t-on besoin de distribuer ou ramasser des matières ou marchandises dans des rues à habitations plus ou moins denses,après les avoir fait venir de relativement loin, notamment d'une banlieue ou campagne. Tel est le cas de la livraison de marchandises à des distributeurs en ville, ou le cas du ramassage d'ordures ménagères ou autres, dans des quartiers habités, alors qu'e les marchandises proviennent d'usines, gares, ports ou autres sources, éloignées de nombreux kilomètres des lieux de leur distribution. De même, lorsqu'il s'agit de l'évacuation d'ordures d'un quartier urbain, la décharge se trouve le plus souvent fort éloignée de celui-ci. Or, dans les lieux habités, le transporteur est obligé de se déplacer à allure très modérée, avec des arrêts fréquents ; en outre, pour des raisons évidentes, il doit faire le moins de bruit possible, surtout aux heures tardives ou précoces de la journée, et réduire la pollution à son minimum.

Les transports en question comprennent donc deux phases différenciées : la phase de "travail", c'est-à-dire de distribution ou de ramassage, à faible vitesse, en silence, sans pollution gênante, et avec arrêts fréquents, et une phase de "transport" à vitesse normale ou rapide entre cette zone de travail et la source des marchandises ou une décharge.

Les modes de transport et véhicules, employés jusqu'à présent, conviennent mal aux opérations différenciées décrites plus haut. Ainsi, par exemple, la distribution usuelle de bouteilles de boissons aux débits d'un quartier urbain par des camions à moteur Diesel causent un bruit et une pollution gênants ; il en est de même du ramassage des ordures, alors que la puissance du moteur ne peut en rien accélérer le travail qui nécessite des arrêts fréquents.

Pour satisfaire aux besoins des transports différenciés ci-dessus, on a déjà proposé d'équiper des véhicules de deux motorisations différentes : une motorisation principale, en général du type thermique, pour la circulation normale du véhicule, c'est-à-dire à grande vitesse et/ou sans arrêts fréquents, et une motorisation auxiliaire, en général du type électrique, pour la circulation à basse vitesse, sans bruit ni pollution, et/ou avec arrêts fréquents.

Les véhicules proposés jusqu'à présent, qui sont équipés de ces deux motorisations, sont de deux types : les véhicules à un seul élément, ou monobloc, comportant un essieu avant et au moins un essieu arrière, et les véhicules composés, c'est-à-dire comportant un élément avant, ou tracteur, et un élément arrière assurant la seule fonction d'entrainement auxiliaire. Dans les véhicules du premier type, les deux moteurs (thermique et électrique) entraînent le même essieu ou deux essieux différents. Dans les véhicules composés du second type, (EP-A-0.041.111 et DE-A-3.739.919), l'élément avant est un véhicule normal et complet, assurant à lui seul l'intégralité des fonctions d'entrainement et de transport de charge, tandis que l'élément arrière est constitué par une petite remorque séparable dont la seule fonction est d'assurer l'entrainement auxiliaire et qui, à cet effet, est équipée d'une source d'énergie électrique (batterie ou accumulateur), d'un moteur électrique et d'une transmission pour l'entrainement de roues de la remorque.

Ces deux types de véhicules présentent divers inconvénients. Dans le premier type, la charge constituée par la source d'énergie électrique, le moteur électrique et la transmission constitue un poids mort permanent lorsque le véhicule se déplace grâce à l'entrainement principal; dans le second type, la nécessité d'avoir recours à un véhicule annexe pour assurer l'entrainement auxiliaire, d'une part, augmente le coût et la longueur du véhicule composé ; de manière considérable, ce qui compense largement les avantages d'un entrainement auxiliaire électrique, et, d'autre part, rend le véhicule d'une exploitation peu commode en effet, ou bien la remorque reste attelée en permanence, ce qui permet, certes, d'utiliser l'entraînement auxiliaire à tout moment mais impose au véhicule d'avoir à tracter la plupart du temps une remorque constituant un poids mort et rendant le véhicule d'une conduite délicate et d'une longueur inutilement grande, ou bien la remorque n'est attelée que lorsque l'utilisateur croit devoir en avoir besoin, ce qui pose des problèmes de remisage de la remorque lorsqu'elle n'est pas utilisée et, bien sûr, interdit l'utilisation de l'entrainement auxiliaire lorsque la remorque est remisée et que, occasionnellement et de manière imprévue, cet entrainement est nécessaire ; au surplus, avec ce second type de véhicule, on comprend bien les inconvénients qui résultent de la nécessité d'avoir à tracter une remorque, dont la seule fonction est d'assurer l'entrainement auxiliaire, par exemple sur un long trajet à la fin duquel l'entraînement auxiliaire sera peut-être utilisé.

L'invention vise précisément ces véhicules composés du second type à double motorisation et se propose de les perfectionner en éliminant les inconvénients ci-dessus.

A cet effet, le véhicule routier composé selon l'invention pour le transport d'une charge comportant, d'une manière connue par les documents EP-A-0.040.111 et DE-A-3.739.919, d'une part, un tracteur équipé de moyens moteurs thermiques entraînant des roues motrices dudit tracteur pour la circulation routière ou urbaine du véhicule à vitesse normale et, d'autre part, une remorque ou semi-remorque attelée de manière séparable au tracteur, la remorque ou semi-remorque étant équipée d'une source d'énergie électrique du type accumulateurs, de moyens moteurs électriques commandés depuis la cabine du tracteur, et d'une transmission reliant les moyens moteurs à des roues motrices de la remorque ou semi-remorque, pour assurer la circulation du véhicule composé complet à basse vitesse, notamment en site urbain nécessitant silence, absence de pollution et arrêts fréquents, est caractérisé, selon la Revendication 1 annexée, en ce que : le tracteur assure la seule fonction d'entraînement par voie thermique du véhicule composé complet ou du tracteur seul ; et la remorque ou semi-remorque assure la réception et le transport de toute la charge, cette dernière assurant ainsi la double fonction de transport de toute la charge et d'entraînement auxiliaire.

De préférence, la puissance du moteur électrique est calculée pour l'entraînement du véhicule à charge maximale à une vitesse modérée, par exemple de 10 à 50 km/h, et surtout de 20 à 40 km/h, compatible avec la distribution ou le ramassage de matières en milieu urbain. Par contre, le moteur thermique, à explosion ou à combustion interne est, de préférence,bien plus puissant, pour pouvoir entraîner le véhicule à charge maximale à vitesse usuelle sur les routes, notamment de 60 à 120 km/h.

Une forme d'exécution particulièrement pratique de l'invention consiste à utiliser un tracteur à moteur thermique, capable de transporter le poids voulu, sur des nombreux kilomètres, à une vitesse de 60 à 90 km/h, et une remorque ou semi-remorque équipée d'un moteur électrique pouvant faire rouler sa charge et le tracteur à une vitesse modérée, notamment de 10 à 50 km/h. La remorque étant attelée au tracteur, l'invention conduit à cette solution originale que - pendant la distribution de marchandises ou pendant le ramassage de matières en milieu urbain, à déplacements lents avec nombreux arrêts le moteur électrique de la remorque, non seulement entraîne celle-ci avec sa charge, mais fait également rouler le tracteur.

Le moteur thermique du tracteur est mis en marche, le moteur électrique étant arrêté, lorsque la distribution ou le ramassage est terminé, et l'on quitte le milieu urbain pour conduire la remorque, rapidement, vers une source de nouvelles marchandises ou sur une décharge des matières ramassées.

Ainsi, par exemple, dans le cas des ordures ménagères, le ramassage, dans une semi-remorque mue électriquement, peut s'effectuer silencieusement, sans pollution, à toute heure du jour ou de la nuit et de manière énergétiquement économique, tandis que l'amenée de cette remorque à une décharge située à une distance de nombreux kilomètres peut être très rapide, grâce à l'entraînement par le tracteur à moteur thermique.

Les deux moteurs, électrique et thermique, pourraient éventuellement, en cas de besoin, être utilisés simultanément et arrêtés indépendamment l'un de l'autre.

Les véhicules utilisés pour la réalisation de l'invention peuvent être de types et de puissances très variés ; il est cependant préférable d'effectuer la traction électrique avec des moteurs d'une puissance d'environ 15 à 50 kW, ou mieux de 20 à 40 kW, la puissance du ou des moteurs thermiques étant de 100 à 300 CV (74 à 224 kW). Ainsi, contrairement aux véhicules hybrides connus, portant à la fois un moteur thermique et un moteur électrique de sensiblement même puissance, les véhicules selon l'invention ne présentent pas l'inconvénient d'avoir à transporter un très gros poids de batteries électriques, parce que la puissance de leur traction électrique est relativement bien moindre. Le rapport préféré de la puissance électrique à celle du moteur thermique est de 1/2 à 1/10, et surtout 1/3 à 1/6.

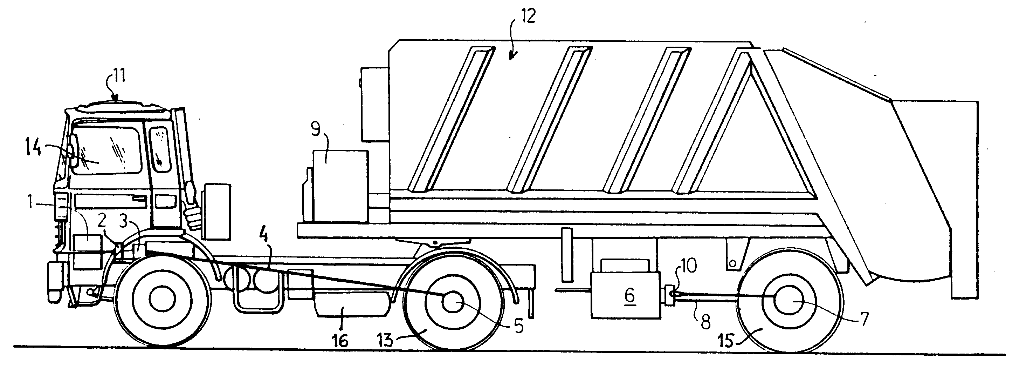

L'invention est illustrée par la description qui suit d'une forme d'exécution particulière, nullement limitative, en référence au dessin annexé dont la figure unique représente schématiquement en élévation latérale un tracteur et une semi-remorque pour le ramassage d'ordures ménagères.

Le tracteur 11 est équipé, de façon usuelle, d'un moteur thermique de traction 1, d'une transmission de puissance à embrayage 2, boîte de vitesses 3, arbre à cardans 4 et pont arrière 5 comportant des roues motrices 13. L'énergie thermique est stockée sous forme de combustible liquide dans un réservoir 16.

En outre, conformément à l'invention, la remorque 12 comprend un moteur électrique 6 à courant continu et une transmission de mouvement entre ce moteur 6 et le pont arrière 7 de la remorque comportant des roues motrices 15, par arbre à cardans 8. L'énergie électrique est stockée dans une batterie d'accumulateurs 9. Puisqu'on utilise l'énergie électrique essentiellement pour les opérations de ramassage des déchets urbains, pendant lesquelles la vitesse du véhicule est de toute façon réduite, et pour quelques fonctions auxiliaires, indiquées plus loin, la capacité que doit fournir la batterie 9, et donc son encombrement, restent compatibles avec une installation à bord du véhicule, tout en assurant une autonomie de déplacement suffisante pour les missions journalières . Au surplus, le poids, l'encombrement et le coût de l'ensemble des moyens d'entraînement auxiliaire électrique, intégralement portés par la remorque, sont quasiment négligeables par rapport au poids total, au volume utile de la remorque 12 et à son prix de revient. En outre, ces moyens auxiliaires d'entrainement sont portés par remorque et, précisément, n'ont à être mis en oeuvre que lorsque la remprque est attelée, ce qui est particulièrement avantageux car, lorsque le tracteur est seul, et que par conséquent l'entraînement auxiliaire n'est pas nécessaire, le moteur 1 du tracteur 11 n'a pas à fournir la puissance nécessaire, et n'a par conséquent pas à consommer l'énergie correspondante, pour déplacer ces moyens auxiliaires.

L'intérêt et le mérite essentiels de l'invention résident donc en ce que les moyens auxiliaires d'entrainement sont portés par la remorque elle-même qui, par ailleurs, outre qu'elle assure elle-même la fonction d'entrainement auxiliaire, cumule cette fonction, de manière originale, avec la fonction de transport de la charge, l'augmentation de poids et de coût, ainsi que l'encombrement, des moyens auxiliaires étant négligeables si on les rapporte respectivement au poids de la remorque en charge, à son coût total et à son volume utile.

Dans un exemple de réalisation, la charge utile de la benne est de 11080 kg, le moteur thermique a une puissance de 173 kW (230 CV) et le moteur électrique a une puissance de 30 kW. La batterie, composée de 48 éléments de 2 V, soit une tension totale de 96 V, possède une capacité de 650 à 1050 Ah suivant l'autonomie recherchée. Son poids est de 2,8 à 4 tonnes et son encombrement d'environ 2,1x0,8x0,8 m. Le véhicule peut atteindre une vitesse maximale de 35 km/h environ en propulsion électrique et de 100 km/h environ en traction thermique.

Le réglage électrique de vitesse du moteur à courant continu est bien connu et la transmission de puissance du moteur électrique ne nécessite donc pas de boîte de changement de vitesse et d'embrayage à friction.

Conformément à l'invention, on interpose simplement un embrayage électro-magnétique 10 pour désaccoupler automatiquement le moteur électrique, lorsque celui-ci n'est pas sous tension, et pour l'accoupler au pont arrière 7, lorsqu'on le met sous tension. Pendant l'utilisation du moteur électrique, la boîte de vitesses du tracteur est placée au point mort, pour isoler le moteur thermique, et on prévoit un verrouillage électrique ou mécanique pour interdire la mise en service du moteur électrique de propulsion, si la boîte de vitesses n'est pas au point mort.

Dans le même exemple de réalisation que ci-dessus, le réglage de puissance et de vitesse s'effectue au moyen d'un dispositif électronique du type hacheur de courant à thyristor, dont le mécanisme de commande est relié à la pédale d'accélérateur de la cabine 14 du tracteur, de sorte que les moyens de conduite restent les mêmes, quelle que soit l'énergie utilisée et que la course de la pédale correspond à la fois à la plage de variation de puissance des deux moteurs.

Conformément à l'invention, des dispositions sont prises pour que la direction assistée, le freinage assisté, le compactage des déchets, la signalisation et les autres asservissements éventuels soient assurés en permanence, quelle que soit la source d'énergie utilisée (thermique ou électrique).

Ainsi, dans l'exemple de réalisation précité, on équipe le véhicule de :
- un électro-compresseur d'air, de puissance 1,5 kW, alimenté électriquement par la batterie 96 V et fournissant l'air comprimé nécessaire au freinage pneumatique ;
- une électro-pompe à huile, puissance 1,2 kW, alimentée électriquement par la batterie 96 V et fournissant le fluide hydraulique sous forte pression, nécessaire à la direction assistée ;
- un coffret de commande, à la portée du conducteur, équipé d'un commutateur "THERMIQUE-ELECTRIQUE", d'un inverseur de marche AV/AR pour la propulsion électrique, et du relayage nécessaire aux sécurités et aux fonctions précitées ;
- un coffret de commande du moteur électrique de compactage.

Le véhicule composé conforme à l'invention est utilisé comme suit, au travail, c'est-à-dire lorsque la remorque 12 est attelée :
Le parcours entre le garage et le lieu de ramassage s'effectue de façon usuelle, la propulsion étant assurée par le moteur thermique 1. A l'arrivée sur les lieux de collecte des déchets, le conducteur place la boîte de vitesses du tracteur au point mort, arrête le moteur thermique, puis positionne le commutateur sur "ELECTRIQUE". Le moteur électrique 6 démarre, l'embrayage électromagnétique 10 s'enclenche automatiquement, si nécessaire avec une temporisation, et toutes les fonctions auxiliaires restent disponibles. Le conducteur peut alors régler la vitesse du véhicule, de 0 à 30 km/h environ, par simple action sur la pédale d'accélérateur. A la fin de la collecte, il procède aux manoeuvres inverses, pour revenir en traction thermique. Le passage d'une source d'énergie à l'autre est donc extrêmement simple.

Dans l'exemple de réalisation précité, le véhicule effectue un parcours routier (en ville) de 20 km en 1h15 mn, en traction thermique, et un parcours de collecte de 14 km en 4h25mn, en propulsion électrique, la charge collectée étant de 9860 kg.

## Revendications

1. Véhicule routier composé, comportant, d'une part, un tracteur (11) équipé de moyens moteurs thermiques (1) entraînant des roues motrices (13) dudit tracteur pour la circulation routière ou urbaine du véhicule à vitesse normale et, d'autre part, une remorque ou semi-remorque (12) attelée de manière séparable au tracteur (11), la remorque ou semi-remorque (12) étant équipée d'une source d'énergie électrique (9) du type accumulateurs, de moyens moteurs électriques (6) commandés depuis la cabine (14) du tracteur (11), et d'une transmission (8,10) reliant les moyens moteurs à des roues motrices (15) de la remorque ou semi-remorque, pour assurer la circulation du véhicule composé complet à basse vitesse,notamment en site urbain nécessitant silence,absence de pollution et arrêts fréquents,
caractérisé en ce que
le tracteur assure la seule fonction d'entraînement par voie thermique du véhicule composé complet ou du tracteur seul et la remorque ou semi-remorque assure la réception et le transport de toute la charge,
cette dernière assurant ainsi la double fonction de transport de toute la charge et d'entraînement auxiliaire.

2. Véhicule selon la revendication 1, caractérisé en ce que l'entraînement électrique est effectué avec une puissance moindre que celle de l'entraînement par les moyens moteurs thermiques.

3. Véhicule selon l'une des revendications 1 et 2, caractérisé en ce que la puissance électrique utilisée représente 1/2 à 1/10, et plus particulièrement 1/3 à 1/6, de la puissance thermique disponible.

4. Véhicule selon l'une des revendications 1 à 3, caractérisé en ce que l'entraînement électrique seul est susceptible d'imprimer à l'ensemble une vitesse de déplacement de 10 à 50 km/h,tandis qu'une vitesse de 60 à 120 km/h est possible avec l'entraînement thermique seul.

5. Véhicule selon l'une des revendications 1 à 4, caractérisé en ce que la puissance électrique en courant continu disponible, fournie par des batteries, est d'environ 15 à 50 kW, et de préférence de 20 à 40 kW, tandis que la puissance thermique est d'environ 74 à 224 kW (100 à 300 CV).

6. Véhicule selon l'une des revendications 1 à 5, caractérisé en ce que la même pédale d'accélérateur du tracteur, qui commande la vitesse par l'entraînement thermique (1), sert également au réglage de la vitesse par l'entraînement électrique (6), lorsque la boîte de vitesses (3) de l'entraînement thermique est au point mort.

7. Véhicule selon la revendication 6, caractérisé en ce que ladite pédale commande l'entraînement électrique (6) par l'intermédiaire d'un dispositif électronique du type hacheur de courant à thyristor.

## Claims

1. Compound road vehicle including on the one hand a tractor (11) equipped with thermal drive means (1) driving the driving wheels (13) of the said tractor when the vehicle is travelling on the road or in town at normal speed, and on the other hand a trailer or semi-trailer (12) separably coupled to the tractor (11), the trailer or semi-trailer (12) being equipped with an electrical power source (9) of the accumulator type, electric drive means (6) controlled from the cab (14) of the tractor (11), and a transmission (8, 10) connecting the drive means to driving wheels (15) on the trailer or semi-trailer, so that the complete compound vehicle can travel at low speed, notably in an urban area requiring silence, the absence of pollution and frequent stoppages, characterised in that the tractor fulfils the sole function of thermally driving the complete compound vehicle or the tractor alone and the trailer or semi-trailer receives and transports the entire load, the latter thus fulfilling the dual function of transportation of the entire load and auxiliary drive.

2. Vehicle according to Claim 1, characterised in that the electric driving is effected with a power less than that of driving by the thermal drive means.

3. Vehicle according to one of Claims 1 and 2, characterised in that the electric power used represents 1/2 to 1/10 and more particularly 1/3 to 1/6 of the available thermal power.

4. Vehicle according to one of Claims 1 to 3, characterised in that the electric drive alone is capable of giving the whole a speed of movement of 10 to 50 km/h, whilst a speed of 60 to 120 km/h is possible with the thermal drive alone.

5. Vehicle according to one of Claims 1 to 4, characterised in that the available DC electric power supplied by batteries is approximately 15 to 50 kW and preferably 20 to 40 kW, whilst the thermal power is approximately 74 to 224 kW (100 to 300 continental hp).

6. Vehicle according to one of Claims 1 to 5, characterised in that the same accelerator pedal on the tractor, which controls the speed through the thermal drive (1), also serves to govern the speed through the electric drive (6), when the gearbox (3) of the thermal drive is in neutral.

7. Vehicle according to Claim 6, characterised in that the pedal controls the electric drive (6) by means of an electronic device of the thyristor current-chopper type.

## Patentansprüche

1. Gegliedertes Straßenfahrzeug bestehend aus einerseits einer Zugmaschine (11), die mit einem Verbrennungsmotor (1) als Antriebsmittel ausgerüstet ist, der die Antriebsräder (13) des besagten Straßenfahrzeugs für den planmäßigen Straßen- oder Stadtverkehr bei normaler Geschwindigkeit antreibt, und andererseits einem Anhängefahrzeug oder einem Sattelauflieger (12), der in lösbarer Weise mit der Zugmaschine (11) gekuppelt ist, wobei das Anhängefahrzeug oder der Sattelauflieger (12) mit einer elektrischen Energiequelle (9) in Form von Akkumulatoren, einem von der Fahrerkabine (14) der Zugmaschine (11) aus gesteuerten Elektromotor (6) als Antriebsmittel und einer Transmission (8, 10) zur Verbindung der motorischen Antriebsmittel mit den Antriebsrädern (15) des Anhängefahrzeugs oder des Sattelaufliegers ausgestattet ist, um den Betrieb des gesamten Fahrzeugs bei niedrigen Geschwindigkeiten zu übernehmen, insbesondere im innerstädtischen Bereich mit häufigen Zwischenhalten und unter der Notwendigkeit von Geräuscharmut und Schadstofffreiheit,
dadurch gekennzeichnet, daß
die Zugmaschine die alleinige Funktion des Antriebs des gesamten Fahrzeugs oder nur der Zugmaschine mittels Verbrennungsmotor übernimmt, während das Anhängefahrzeug oder der Sattelauflieger für Aufnahme und Transport der gesamten Nutzlast zur verfügung steht, so daß das letztere Fahrzeug also die Doppelfunktion des Transports der gesamten Nutzlast und der Bereitstellung des Hilfsantriebs erfüllt.

2. Fahrzeug nach Anspruch 1, dadurch gekennzeichnet, daß der elektrische Antrieb mit geringerer Leistung erfolgt als der Antrieb durch Verbrennungsmotoren als Antriebsmittel.

3. Fahrzeug nach Anspruch 1 oder 2, dadurch gekennzeichnet, daß die eingesetzte elektrische Leistung im Bereich von 1/2 bis 1/10 und insbesondere bei 1/3 bis 1/6 der verfügbaren Leistung des Verbrennungsmotors liegt.

4. Fahrzeug nach einem der Ansprüche 1 bis 3, dadurch gekennzeichnet, daß der elektrische Antrieb allein in der Lage ist, dem gesamten Fahrzeug eine Geschwindigkeit von 10 bis 50 km/h zu verleihen, während mit dem Verbrennungsmotor allein eine Geschwindigkeit von 60 bis 120 km/h möglich ist.

5. Fahrzeug nach einem der Ansprüche 1 bis 4, dadurch gekennzeichnet, daß die durch Batterien bereitgestellte verfügbare elektrische Gleichstromleistung bei etwa 15 bis 50 kW, und vorzugsweise bei 20 bis 40 kW liegt, während die Leistung des Verbrennungsmotors 74 bis 224 kW (100 bis 300 PS) beträgt.

6. Fahrzeug nach einem der Ansprüche 1 bis 5, dadurch gekennzeichnet, daß das Fahrpedal der Zugmaschine, das die Geschwindigkeit beim Antrieb durch den Verbrennungsmotor (1) regelt, gleichzeitig zur Regelung der Geschwindigkeit bei elektrischem Antrieb (6) dient, wenn sich das Getriebe (3) für den Antrieb durch den Verbrennungsmotor in der Leerlaufstellung befindet.

7. Fahrzeug nach Anspruch 6, dadurch gekennzeichnet, daß das genannte Pedal mittels einer elektronischen Vorrichtung in Form eines thyristorbestückten Zerhackers den elektrischen Antrieb (6) steuert.
